# EUROPEAN PATENT APPLICATION

(11) **EP 4 096 023 A1**
(43) Date of publication of application: **30.11.2022**
(21) Application number: 22175428.6
(22) Date of filing: 25.05.2022
(51) Int. Cl.: H01R 4/56, H01M 50/00, H01R 4/58, H01R 11/26, H01R 11/28, H01M 50/517, H01M 50/552, B60R 16/00

(54) **CONTACT ASSEMBLY WITH A FRICTIONALLY MATED CONTACT ELEMENT AS WELL AS MODULE CONNECTOR, CONNECTION ASSEMBLY, BATTERY CELL AND BATTERY MODULE WITH SUCH CONTACT ASSEMBLIES**

(30) Priority: 27.05.2021 DE 102021113768
(71) Applicant: TE Connectivity Germany GmbH, 64625 Bensheim (DE)
(72) Inventor: EHEIM, Manuel, 64625 Bensheim (DE); WEBER, Alexander, 64625 Bensheim (DE); HOFFMANN, Bjoern, 64625 Bensheim (DE); KAEHNY, Frank, 64625 Bensheim (DE); DISTLER, Patrick, 64625 Bensheim (DE); WOLF, Marcus, 64625 Bensheim (DE)
(74) Representative: Grünecker Patent- und Rechtsanwälte PartG mbB

(57) **Abstract**

The present invention relates to an electrically conductive contact assembly (1, 1', 1") for a module connection, wherein the contact assembly (1, 1', 1") comprises a contact element (4, 4', 4"), a busbar (6, 6', 6"), and a fastener (8, 8', 8") for fastening the contact assembly (1) to a counterpart (20) of the module connection configured complementarily to the fastener (8, 8', 8"), wherein the contact element (4, 4', 4") comprises a lead-through opening (10) for inserting the fastener (8, 8', 8"), a contact section (12) extending in a tube-shaped manner along the lead-through opening (10) with a contact surface (50, 50', 50") for a counter contact (52) of the module connection, and a collar section (14), which connects to the contact section (12) and extends the lead-through opening (10) in a sleeve-shaped manner, wherein the busbar (6, 6', 6") comprises a reception opening (16) for receiving at least the collar section (14), wherein the contact element (4, 4', 4") is configured affixable in the reception opening (16) with the busbar (6, 6', 6") in a frictionally engaging manner at a first friction surface (42), wherein the contact element (4, 4', 4") is configured affixable in the reception opening (16) with the busbar (6, 6") or in the lead-though opening (10) with the fastener (8, 8') in a frictionally engaging manner at a second friction surface (70), and wherein the first friction surface (42) and the second friction surface (70) are mutually offset at least in a radial direction (72) with respect to the lead-though opening (10). Advantageously, the contact element (4, 4', 4") and the busbar (6, 6',6") can be frictionally mated, instead of being manufactured integrally or welded together. Further, the present invention relates to a module connector (118), a connection assembly (2), a battery cell as well as a battery module with at least one contact assembly (1, 1', 1").

## Description

The present invention relates to an electrically conductive contact assembly for a module connection, e.g. of a battery module, for example but not exclusively for applications in the automotive and energy technology sector. Furthermore, the present invention relates to a module connector, a connection assembly, a battery cell, and a battery module with at least one such contact assembly.

For the transmission of electrical currents in the order of several hundred amperes between electrical modules, such as e.g. battery modules and electric motors or other electrical consumption units, busbars made of copper, aluminum or alloys containing copper and/or aluminum are often used in automotive and power engineering. In order to be able to connect the electrical modules to each other, the busbars are often provided with contact sections which project from the remaining busbar, provide a defined contact surface and are pressed together by fastener. In this context, the projecting contact sections represent a discontinuity in the shape of the respective busbar, which often leads to challenges in manufacturing.

If the busbar is manufactured in one piece with the contact section, e.g. by forging or extrusion, the remaining section of the busbar often cannot be configured completely freely but is subject to constructional restrictions, since the entire busbar could otherwise not be manufactured or could only be manufactured at great effort. In other words, busbars manufactured in one piece are limited in their geometry and therefore cannot have complex courses. However, modern battery applications in the field of electromobility in particular require busbars with complex profiles, especially since battery modules and electric motors are increasingly distributed in a decentralized manner in the vehicle in order to save installation space.

If the contact sections are instead welded to the busbar during manufacture as previously separate components, restrictions also arise because the aspect of weldability must be superordinate to other properties of the materials and the construction. This may mean that particularly weight-saving materials or material combinations cannot be used because they are not suitable for welding.

Accordingly, the underlying problem of the present invention is to provide modular connections that can be configured more freely in terms of geometry and choice of material and can thus be manufactured more easily.

This problem is solved by an electrically conductive contact assembly for a module connection, wherein the contact assembly comprises a contact element, a busbar and a fastener for fastening the contact assembly to a counterpart of the module connection which is configured to be complementary to the fastener, wherein the contact element has a lead-through opening for inserting the fastener, a contact section extending in a tube shape along the lead-through opening and having a contact surface for a counter contact of the module connection, and a collar section adjoining the contact section and extending the lead-through opening in a sleeve shaped manner, wherein the busbar comprises a reception opening for receiving at least the collar section, wherein the contact element is configured to be frictionally affixable to the busbar at a first friction surface in the reception opening, wherein the contact element is configured to be frictionally affixable to a second friction surface in the reception opening with the busbar or in the lead-through opening with the fastener, and wherein the first friction surface and the second friction surface are offset relative to each other at least in the radial direction with respect to the lead-through opening.

The present invention is preferred because the contact section with the contact surface is provided on the contact element and thus on a component separate from the busbar. The busbar can therefore be manufactured completely independently of the contact element, having a complex course, and then mated to the contact element. Thanks to the fixability via the first friction surface, no welding together is necessary, so that the contact element and the busbar can be manufactured from materials that would otherwise be impossible or very difficult to weld. As will be explained in more detail below, the second friction surface, which is radially offset from the first friction surface, also advantageously serves to provide fixability.

In summary, this means that in the contact assembly according to the invention, the geometric structure as well as the choice of materials is not restricted, or at least is less restricted compared to the busbars manufactured in one piece or welded together described at the beginning. Thus, a generally improved manufacturability is achieved.

The invention can be further improved by the following configurations, each of which is advantageous in itself and can be combined with one another as desired.

According to a first exemplary embodiment, the contact element can have a nickel- and/or silver-containing coating to improve its contact properties. In particular, the contact element can be fully coated, since the contact element is provided as a separate component before being affixed to the busbar and does not have to withstand thermal stress by welding processes. This is preferred, especially since a complete coating can be achieved, for example, by means of an electroplating dipping process, which eliminates the need for time-consuming sealing and bonding steps that would be necessary in a selective coating process for busbars manufactured in one piece or welded together.

According to a further exemplary embodiment, the contact element can be frictionally affixed to the busbar with the first friction surface and thus mated to the busbar. Thus, the contact element is advantageously held captively and the manageability of the contact assembly according to the invention increases. For example, the contact element can be configured as a cylindrical contact ring which is frictionally inserted into the reception opening of the busbar at least in sections, in particular with the collar section. The contact surface can be formed by an end face of the contact section facing away from the collar section and be accessible for the counter contact.

In order to enable maintenance or repair of the module connection, the fastener of the contact assembly is preferably configured to be detachably affixed to the counterpart of the module connection that is complementary to the fastener. Accordingly, the module connection is a preferably detachable module connection. For this purpose, the fastener may, for example, comprise a threaded section. In particular, the fastener can be configured as a screw with an external thread on the threaded section. Alternatively, the fastener can be configured as a threaded sleeve with an internal thread on the threaded section. The counterpart of the module connection, which is configured to complement the fastener, can have the corresponding mating thread in each case. The use of a screw connection is particularly preferred in this case, as it allows an axial force to be applied which presses the contact surface of the contact element onto the aforementioned counter contact. The resulting surface pressure on the contact surface increases the contact force and consequently reduces the contact resistance.

The fastener may have a radially outwardly extending support section. For example, the support section can project circumferentially in a plate-shaped manner from the remainder of the fastener. The support section can, for example, be formed by a screw head of the fastener configured as a screw or by an annular widening of the fastener configured as a threaded sleeve. In the assembled state of the contact assembly, the support section of the fastener and the contact section of the contact element are opposite each other with respect to the busbar so as not to restrict the accessibility of the contact surface of the contact section.

The contact element configured as a contact ring can have a circular cross-section in the axial direction. This simplifies the insertion process in the reception opening, since the contact element can be inserted in any rotational position relative to the busbar. Of course, the contact ring can also have a non-circular cross-section, in particular an oval, elliptical, square, rectangular or polygonal cross-section, at least locally, e.g. at the collar section, in order to prevent unintentional twisting of the contact element in the reception opening.

In order to prevent the contact element from being inserted too deeply into the reception opening of the busbar, the contact element and the busbar can be configured to form an at least one-sided form fit with each other in addition to the frictional connection already described. Preferably, the positive connection is in the axial direction with respect to the lead-through opening. For this purpose, the contact element can have a preferably circumferential shoulder between the contact section and the collar section, wherein the contact element abuts against the busbar with the shoulder. In particular, the contact section can have a larger outer diameter than the collar section and the shoulder can form a shoulder-like transition between the contact section and the collar section.

In order to create the aforementioned one-sided form fit between the contact element and the busbar, the reception opening of the busbar can optionally have several different inside diameters along its depth. In particular, the reception opening can have a narrower area with a smaller inner diameter and a wider area with a larger inner diameter. Preferably, the outer diameter of the collar section is oversized with respect to the inner diameter of the narrower area, while the outer diameter of the contact section is oversized with respect to the inner diameter of the wider area. The busbar may have a step in the reception opening between the narrower area and the wider area. A step surface of the step facing into the wider area forms the transition between the smaller and larger inner diameters. The shoulder of the contact element can rest on this step surface. For this purpose, the reception opening can be configured, for example, as an appropriately dimensioned stepped bore.

In this embodiment with stepped reception opening, at least part of the contact section can also be received in the reception opening in addition to the collar section. This creates an increased contact area between the contact element and the busbar, especially if, as already mentioned, the outer diameter of the contact section is larger than the outer diameter of the collar section. Advantageously, this provides a large conductor cross-section for current transmission. Furthermore, the contact element can thus also be fixed to the busbar with the second friction surface. In other words, both the first friction surface and the second friction surface can be formed on an outer surface of the contact element and serve to provide a frictional connection between the contact element and the busbar. Preferably, the first and second friction surfaces are offset from each other in the axial direction with respect to the lead-through opening and are arranged coaxially. In particular, the first friction surface can be arranged on the collar section and the second friction surface on the contact section. The shoulder of the contact element can lie between the first and second friction surfaces.

Optionally, the reception opening of the busbar may have at least one material recess on its periphery. In particular, the at least one material recess can be located on the circumference of the wider area of the stepped reception opening. The at least one material recess advantageously increases the local deformability of the busbar, so that the mating of the contact element and the busbar is possible with less force.

The at least one material recess can be formed, for example, by a recess extending on the inner surface of the reception opening in the axial direction and radial direction with respect to the reception opening. Preferably, the recess extends through the step surface of the reception opening or is flush with the step surface of the reception opening. For example, the at least one material recess can be created by an axial fine bore and/or a radial notch. The axial fine bore is preferably produced before the stepped bore, whereas the radial notch can be milled after the stepped bore has been produced. Optionally, the reception opening can have several such material recesses distributed around its circumference. Advantageously, this allows a visual or measurement check to be carried out to determine whether the shoulder of the contact element actually rests completely on the step surface of the reception opening. In particular, the unintentional inclusion of dust, chips or other contaminants between the step of the reception opening and the shoulder of the contact element can thus be excluded.

As an alternative to the stepped reception opening, the reception opening can also have only a continuous constant inner diameter along its depth, wherein the outer diameter of the collar section has an oversize with respect to this constant inner diameter. Instead of being affixed to the busbar, the contact element with the second friction surface can alternatively be fixed to the fastener. Accordingly, the first friction surface can be formed on an outer surface of the contact element and the second friction surface on an inner surface of the contact element. In particular, the second friction surface can be used to fix the contact element and the fastener to each other, in particular to fix them in a rotationally fixed manner. This embodiment is preferred, for example, if a torsion receptacle is required on the fastener.

A method of assembling the contact assembly according to the invention also solves the underlying problem introductorily mentioned, wherein said method comprises the steps of providing the contact element, the busbar and the fastener, frictionally locking the contact element to the first friction surface with the busbar, and frictionally locking the contact element to the second friction surface with the busbar or with the fastener. In particular, the last two method steps of frictional fixing can be performed successively or simultaneously. An assembling machine which is configured to carry out the above method preferably automatically, in particular fully automatically, also solves the underlying problem introductorily mentioned.

In the embodiment of the contact assembly with stepped reception opening of the busbar, an outer diameter of the support section of the fastener is at least larger than the smaller inner diameter of the stepped reception opening. In the embodiment with constant reception opening, the outer diameter of the support section is larger than the inner diameter of the constant reception opening. Accordingly, the fastener with the support section can rest circumferentially on the busbar. Preferably, the support section is arranged opposite the threaded section, wherein the distance between the threaded section and the support section is greater than the length of the reception opening of the busbar.

Consequently, the fastener can rest on the busbar on its reverse side with respect to the threaded section when the threaded section of the fastener is inserted into the lead-through opening of the contact element received in the reception opening of the busbar. Thus, the support section provides a supporting surface for the fastener configured as a screw or threaded sleeve, in particular. This supporting surface advantageously serves to transmit the axial force already mentioned above, which is transmitted from the busbar via the shoulder to the contact element and can thus act as surface pressure on the contact surface.

According to another possible embodiment, the collar section can have the same length as the reception opening of the busbar. In other words, a height of the collar section measured in the axial direction with respect to the lead-through opening can correspond to the length of the reception opening. Thus, the collar section is flush with the busbar on its circumference and the support section of the fastener can rest on both the busbar and the collar section. This embodiment gives the fastener increased support stability and is particularly suitable for applications with low thermal loads or when the busbar and the contact element are made of the same material or at least have similar thermal expansion coefficients, so that the flush fit between the busbar and the collar section is not disturbed by thermal expansion of the components.

For applications with expected high thermal loads and/or strongly varying thermal expansion behavior, the collar section can alternatively be configured to be shorter than the reception opening of the busbar. In other words, the height of the collar section measured in axial direction with respect to the lead-through opening can be smaller than the length of the reception opening. This ensures in particular that the collar section does not protrude from the reception opening of the busbar on the outer side and consequently that the support section of the fastener only rests on the busbar. In particular, this creates a gap between the collar section of the contact element and the support section of the fastener. This gap is preferred in two respects:
On the one hand, the gap can be used to prevent the collar section from protruding from the reception opening and lifting the fastener off the busbar if the contact element expands more thermally than the busbar and the fastener during operational heating.

On the other hand, the busbar can be clamped thanks to the gap between the shoulder of the contact element and the support section of the fastener. In the event that the busbar expands more thermally than the contact element and the fastener, the frictional connection between the busbar and the contact element would cancel out, especially since the increase in the outer diameter of the collar section could not compensate for the increase in the inner diameter of the reception opening. The oversize of the outer diameter relative to the inner diameter required for the frictional connection would no longer exist above a certain thermal expansion. Fixation and contacting of the contact element to the busbar would nevertheless continue, since the thermal expansion of the busbar would also inevitably lead to an increase in said clamping.

In order to strengthen the frictional connection between the contact element and the fastener, the fastener can have a knurled section. The knurled section is preferably arranged between the threaded section and the support section and is oversized with respect to the lead-through opening of the contact element. For example, the knurled section can have ribs that project radially, run axially and are distributed over the knurled section in the circumferential direction. In particular, the knurled section can have axially parallel serrations. The knurled section may be produced by knurling a rotationally symmetrical section of the fastener, however it is not limited to round cross-sections, but may also be produced in non-circular cross-sections, in particular oval, elliptical, square, rectangular or polygonal cross-sections, by other forming processes (e.g. stamping), by machining processes (e.g. milling) and/or by primary forming processes (e.g. casting), in which a surface structure as in knurling is obtained.

The oversize of the knurled section is optionally selected such that the collar section of the contact element is deformed, in particular plastically deformed, by the knurled section after insertion of the fastener into the lead-through opening. Since this deformation, depending on the material thickness of the collar section, also affects the outer surface of the collar section forming the first friction surface, the knurled section can furthermore be used to strengthen the frictional connection between the contact element and the busbar.

According to another possible embodiment, the knurled section is shorter than the reception opening of the busbar. In other words, a knurling length measured in the axial direction is smaller than the material thickness of the busbar surrounding the reception opening. Preferably, the knurled section is also shorter than the collar section of the contact element, however the knurled section and collar section are in total longer than the reception opening. Thus, when the knurled section is inserted, the collar section of the contact element is not deformed over its entire height, but only in an area facing away from the contact section. In particular, the collar section is widened in the shape of a cone or wedge. Depending on the deformability of the busbar, the collar section can expand radially in a dowel-like manner in the reception opening and produce an increased frictional connection and, under certain circumstances, a form fit between the inner surface of the reception opening and the deformed collar section.

If torsion accommodation is not expedient or if torsion accommodation is provided in the mating part of the fastening means, the fastening means itself can also be arranged rotatably, preferably freely rotatably, in the lead-through opening of the contact element. The rotatability enables and simplifies the creation of the screw connection already described above with the aid of the fastener.

The reception opening can be located in particular in an end section of the busbar. In addition, the busbar can have at least one further end section in which a further reception opening is optionally arranged. Accordingly, the contact assembly can have at least one further contact element that is fixed in this further reception opening.

The busbar can be both a busbar that runs between at least two electrical modules and a busbar segment that is part of an electrical module. The busbar segment is preferably electrically conductively connected to an electrode or an electrical pole of the electrical module and thus forms a connection of the electrical module. In the case of a busbar, the contact assembly according to the invention can have at least one further contact element, as already mentioned. Accordingly, at least one further reception opening can be provided on the busbar. In particular, the busbar can have a reception opening for a contact element of a contact assembly according to the invention for each electrical module that it connects.

The underlying problem introductorily mentioned can also be solved by a module connector with at least one contact assembly according to the invention and a contact protection housing, wherein the contact protection housing is configured to accommodate the at least one contact assembly. Here, the modular connector according to the invention benefits from the advantages of the contact assembly already mentioned. In particular, the increased freedom of configuration with regard to geometry and choice of material contributes to improved manufacturability of the entire modular connector. Furthermore, the module connector according to the invention is characterized by increased electrical safety. This greatly expands the possible areas of application.

The contact protection housing is preferably made of an electrically insulating material. Optionally, the contact protection housing can have at least one contact protection cap arranged on the fastener. The at least one contact protection cap can, for example, surround the support section of the fastener. Alternatively or additionally, a further contact protection cap may be attached to the threaded section of the fastener. The lead-through opening of the contact element can be configured, at least in sections, to accommodate the counterpart that is complementary to the fastener, in particular its contact protection cap. For this purpose, an inner contour of the lead-through opening can be larger than an outer contour of the contact protection cap of the counterpart.

A connection assembly with two or more contact assemblies, each of which has complementary fasteners, also solves the problem described above. The advantages already mentioned above are also exploited in the connecting assembly according to the invention. In addition, the connection assembly according to the invention can be used directly to create the module connection. For this purpose, the contact elements of the two contact assemblies are frictionally affixed to the respective busbar, pressed against each other with their contact surfaces and held together via the fasteners, which are configured in a complementary manner to each other.

A battery cell with at least one battery terminal, which is configured like the contact assembly according to the invention, also benefits from the advantages already mentioned above and solves the underlying problem introductorily mentioned due to the resulting improvement in manufacturability. The battery cell can further comprise at least one electrode, wherein the busbar of the battery terminal configured as a contact assembly is electrically conductively connected to the at least one electrode.

For reasons of electrical safety, the connection assembly according to the invention may optionally comprise two contact protection housings, each of which is configured to accommodate a contact assembly. The battery cell according to the invention can also have a contact protection housing for the at least one battery terminal.

The underlying problem introductorily mentioned is also solved by a battery module with at least one battery cell according to the invention and at least one module connector according to the invention, wherein the fastener of the battery terminal of the battery cell configured as a contact assembly is configured complementary to the fastener of the contact assembly of the module connector. The battery module according to the invention can be connected to further battery modules and/or electrical consumer units.

Of course, the battery cell can also have two battery terminals, each of which is configured like the contact assembly according to the invention. Accordingly, the battery cell can have two electrodes, wherein one busbar of each of the contact assemblies is electrically conductively connected to one electrode in each case. Furthermore, the battery module can also have a plurality of battery cells and a plurality of module connectors, the fasteners of which are each configured in pairs complementary to one another.

In the following, the invention is explained in more detail with reference to the drawings by means of several exemplary embodiments, the various features of which can be combined with one another as desired in accordance with the above explanations. In particular, individual features may be added to the described embodiments in accordance with the above explanations if the effect of these features is necessary for a particular application. Conversely, individual features can be omitted from the described embodiments if the technical effect of these features is not important in a specific application. In the drawings, similar, identical and functionally identical elements are given identical reference signs where appropriate.

Therein:
- Fig. 1: shows a schematic perspective exploded view of a contact assembly according to a first exemplary embodiment;
- Fig. 2: shows a schematic perspective sectional view of the contact assembly of Fig. 1;
- Fig. 3: shows a schematic perspective sectional view of a contact assembly according to a second exemplary embodiment in exploded view;
- Fig. 4: shows a schematic perspective view of the rear side of the contact assembly of Fig. 3;
- Fig. 5: shows a schematic perspective view of a contact assembly according to a third exemplary embodiment; and
- Fig. 6: shows a schematic sectional view of a connection assembly according to an exemplary embodiment.

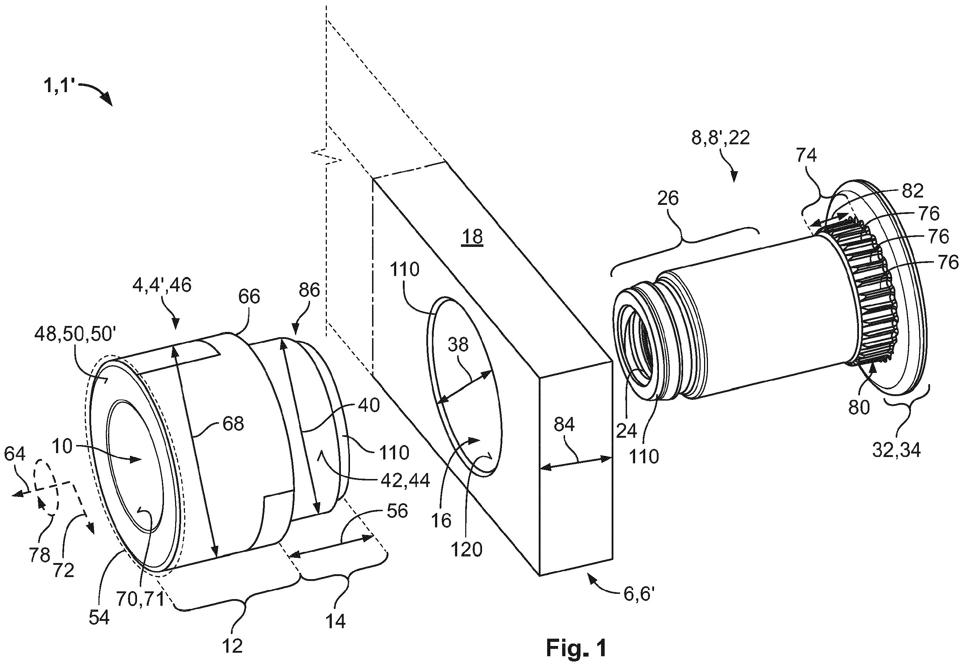

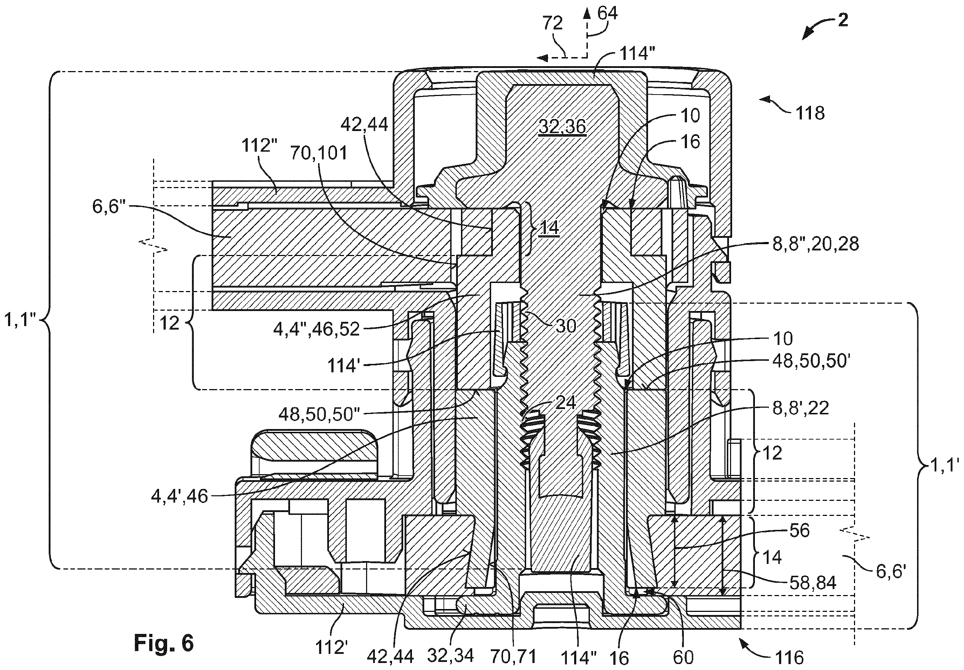

Based on the exemplary embodiments from Figs. 1 to 5, the schematic structure of a contact assembly 1 according to the invention is described below. In addition, the schematic structure of a connection assembly 2 according to the invention is briefly explained with reference to Fig. 6.

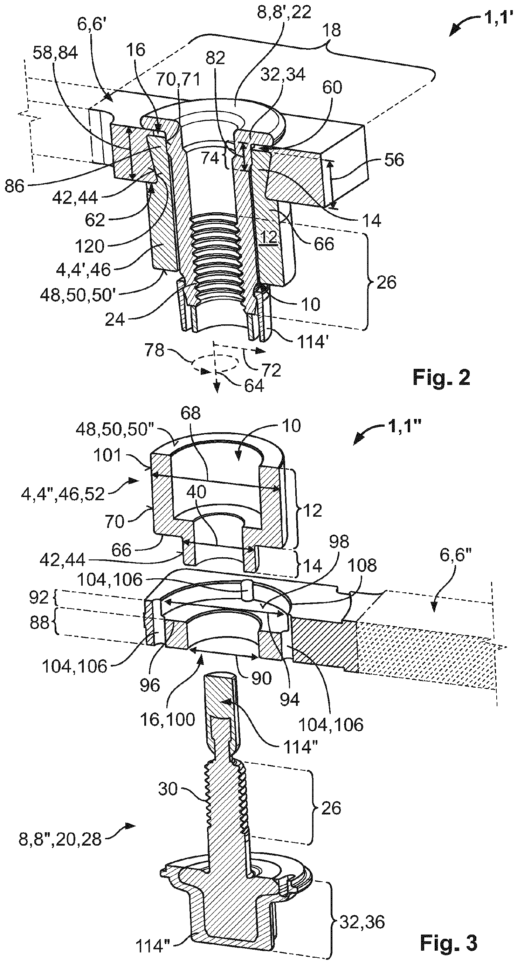

It can be seen from Fig. 1 that the contact assembly 1 in the exemplary embodiment comprises a contact element 4, a busbar 6 and a fastener 8. The contact element 4 and the busbar 6 may be provided as separate components (see Fig. 1) and, as will be explained in more detail below, may be frictionally mated together (see Fig. 2). As a result, the contact element 4 may be fully coated with a nickel- and/or silver-containing coating.

The contact element 4 comprises a lead-through opening 10 for inserting the fastener 8. Along the lead-through opening 10, a contact section 12 of the contact element 4 extends in a tube-shaped manner. A collar section 14 of the contact element 4 adjoins the contact section 12 and extends the lead-through opening 10 in a sleeve-shaped manner.

The busbar 6 has a reception opening 16 for receiving at least the collar section 14. The reception opening 16 is located, for example, in an end section 18 of the busbar 6. The busbar 6 can be both a busbar that runs between at least two electrical modules (not shown) and a busbar segment that is part of an electrical module.

The fastener 8 is used to fasten the contact assembly 1 to a counterpart 20 that is complementary to the fastener 8 (see Fig. 3). The fastener 8 can also be frictionally mated to the contact element 4 (see Fig. 2) or freely rotatably arranged in the lead-through opening 10 of the contact element 4.

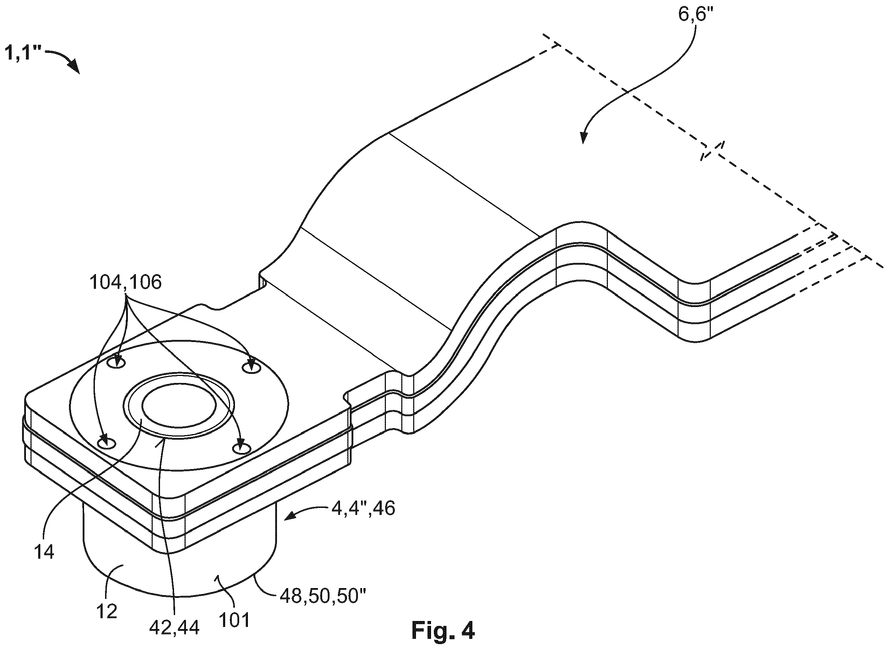

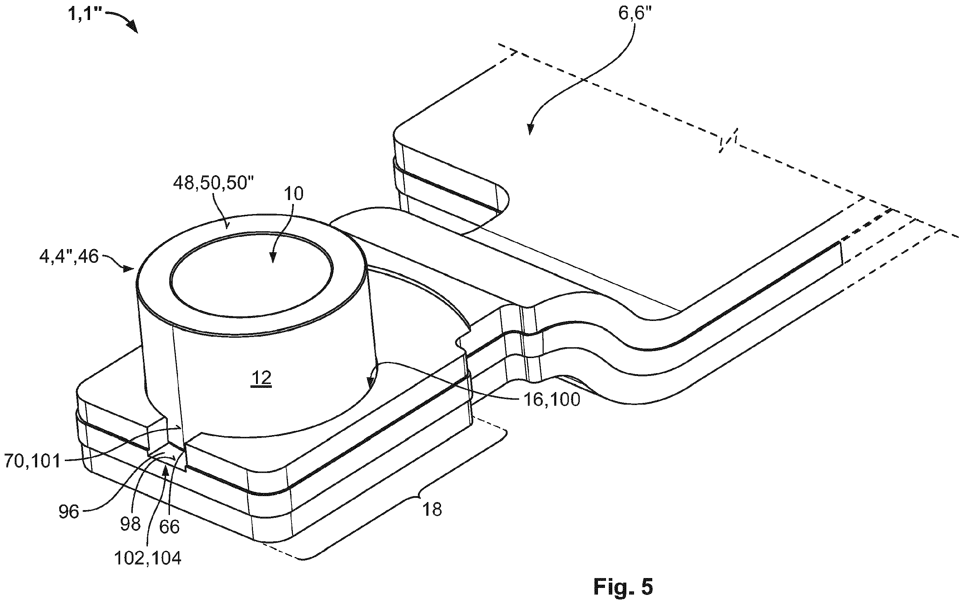

In the exemplary embodiment shown in Figs. 1 and 2, the fastener 8 of the contact assembly 1 is configured as a threaded sleeve 22 with an internal thread 24. The internal thread 24 is located on a threaded section 26 of the fastener 8. In Fig. 3, the fastener 8 is shown as a screw 28 with an external thread 30 on the threaded section 26. In Figs. 4 and 5, the contact assembly 1 is shown without the fastener in each case.

In all the embodiments shown, the fastener 8 has a radially outwardly extending support section 32, wherein the support section 32 projects circumferentially in a plate-shaped manner from the remainder of the fastener 8. In the case of the fastener 8 in Figs. 1 and 2, which is configured as a threaded sleeve 22, the support section 32 is formed by an annular widening 34. The fastener 8 of Fig. 3, configured as a screw 28, has a screw head 36 forming the support section 32. In the assembled state of the contact assembly 1, the support section 32 lies opposite the contact section 12 of the contact element 4 with respect to the busbar 6 (see Fig. 2). Furthermore, the support section 32 lies on the busbar 6 with respect to the threaded section 26 on its outer side when the threaded section 26 of the fastener 8 is inserted into the through-opening 10 of the contact element 4 received in the reception opening 16 of the busbar 6.

The reception opening 16 can have a continuously constant inner diameter 38 along its depth, wherein an outer diameter 40 of the collar section 14 has an oversize with respect to this constant inner diameter 38. In particular, the contact element 4 is configured to be frictionally affixable to the busbar 6 at a first friction surface 42 in the reception opening 16. The first friction surface 42 is arranged on an outer surface 44 of the collar section 14. In Fig. 2, the contact element 4 is frictionally fixed to the busbar 6 by the first friction surface 42 and is thus shown in a state joined to the busbar 6. In the exemplary embodiment shown, the contact element 4 is configured as a cylindrical contact ring 46, which is frictionally inserted with the collar section 14 into the reception opening 16 of the busbar 6. On an end face 48 of the contact section 12 facing away from the collar section 14, the contact element 4 has a contact surface 50 for a counter contact 52 (see Fig. 3).

The contact ring 46 shown in Fig. 1 has a round cross-section 54 in axial direction 64 with respect to the lead-through opening 10. Alternatively, the contact ring 46 can also have a non-circular cross-section (not shown), in particular an oval, elliptical, square, rectangular or polygonal cross-section, at least locally, e.g. at the collar section 14.

Fig. 2 shows that the collar section 14 is shorter than the reception opening 16 of the busbar 6. That is, a height 56 of the collar section 14 measured with respect to the lead-through opening 10 in the axial direction 64 is smaller than the length 58 of the reception opening 16. In order to compensate for thermal expansion processes, an annular gap 60 is provided between the collar section 14 of the contact element 4 and the support section 32 of the fastener 8 in the assembled state of the contact assembly 1.

Alternatively, the collar section 14 can also be configured to be the same length as the reception opening 16 of the busbar 6. This means that in the joined state, the collar section 14 is flush with the busbar 6 (see Fig. 4) and provides the greatest possible support surface for the support section 32 of the fastener 8 together with the busbar 6.

Fig. 2 also shows that the contact element 4 and the busbar 6 additionally form a form fit 62 in the axial direction 64 on at least one side. For this purpose, the contact element 4 has a circumferential shoulder 66 between the contact section 12 and the collar section 14, with which the contact element 4 abuts against the busbar 6. The contact section 12 has a larger outer diameter 68 than the collar section 14 (see Fig. 1), with the shoulder 66 forming a shoulder-like transition between the contact section 12 and the collar section 14. The busbar 6 can thus be clamped between the contact element 4 and the fastener 8, in particular between the shoulder 66 and the support section 32.

Furthermore, the contact element 4 of the contact assembly 1 shown in Fig. 1 is configured to be frictionally affixable to the fastener 8 at a second friction surface 70 in the lead-through opening 10, i.e., at an inner surface 71 of the contact element 4. The first friction surface 42 and the second friction surface 70 are offset from each other with respect to the lead-throughopening 10 in the radial direction 72. Fig. 2 shows the contact element 4 in a frictionally fixed state with the second friction surface 70 on the fastener 8. In particular, the contact element 4 and the fastener 8 are fixed to each other in a rotationally fixed manner.

In the embodiment shown in Figs. 1 and 2, the frictional connection between the contact element 4 and the fastener 8 is reinforced by a knurled section 74 on the fastener 8. This knurled section 74 has an oversize with respect to the lead-through opening 10 of the contact element 4. In the exemplary embodiment shown, the knurled section 74 has ribs 76 that protrude radially, extend axially, and are distributed over the knurled section 74 in the circumferential direction 78. In particular, the knurled section 74 here has serrations 80 parallel to the axis.

Furthermore, the oversize of the knurled section 74 is selected such that the collar section 14 is plastically deformed by the knurled section 74 after insertion of the fastener 8 into the lead-through opening 10. This deformation affects the outer surface 44 of the collar section 14 (see Fig. 2) and thus also strengthens the frictional connection between the contact element 4 and the busbar 6.

As Fig. 2 shows, the knurled section 74 is shorter than the reception opening 16 of the busbar 6. That is, a knurled length 82 measured in the axial direction 64 is smaller than the material thickness 84 of the busbar 6 surrounding the reception opening 16. Furthermore, the knurled section 74 is also shorter than the collar section 14 of the contact element 4, however the knurled section 74 and collar section 14 are in total longer than the reception opening 16. When inserting the contact element 4 and the fastener 8 into the reception opening 16 from opposite sides of the busbar 6, this ensures that the knurled section 74 extends as far as the collar section 14. An area 86 of the collar section 14 facing away from the contact section 12 is thereby widened in a conical shape and expands in a dowel-like manner in the reception opening 16 (see Fig. 2). In this way, a form fit is created between an inner surface 120 of the reception opening 16 and the deformed area 86 of the collar section 14.

The contact element 4 of the contact assembly 1 shown in Fig. 3 is configured to be affixed to the busbar 6 by means of the second friction surface 70 instead of to the fastener 8. For this purpose, the reception opening 16 of the busbar 6 has two different inner diameters 90, 94 along its depth. In particular, the reception opening 16 has a narrower area 88 with a smaller inner diameter 90 and a wider area 92 with a larger inner diameter 94. The outer diameter 40 of the collar section 14 has an oversize with respect to the inner diameter 90 of the narrower area 88, while the outer diameter 68 of the contact section 12 has an oversize with respect to the inner diameter 94 of the wider area 92.

In the reception opening 16, the busbar 6 has a step 96 between the narrower area 88 and the wider area 92. The shoulder 66 of the contact element 4 can rest flat on this step 96 (see Fig. 5). A step surface 98 of the step 96 facing the wider area 92 forms here the transition between the smaller inner diameter 90 and the larger inner diameter 94. The reception opening 16 is configured as a correspondingly dimensioned stepped bore 100.

As shown in Fig. 5, in this embodiment, in addition to the collar section 14, at least a portion of the contact section 12 may also be received in the reception opening 16 of the busbar 6, wherein the second friction surface 70 is offset from the first friction surface 42 in the axial direction 64 and is formed by an outer surface 101 of the contact section 12.

By means of a material recess 104 configured as a radial notch 102 (see Fig. 5), it can be verified that the shoulder 66 of the contact element 4 actually extends to the step surface 98. In addition, the material recess 104 makes the end section 18 of the busbar 6 more easily deformable, so that mating of the contact element 4 and the busbar 6 is possible with less force. As an alternative to the notch 102, an axial fine bore 106 can also form the material recess 104. This can be seen in Figs. 3 and 4, where several axial fine bores 106 are distributed around the circumference 108 of the wider area 92 of the stepped bore 100.

In order to facilitate mutual insertion, the contact element 4, the busbar 6 and/or the fastener 8 may have insertion bevels 110 (see Fig. 1).

The contact assembly 1' of Fig. 2 and the contact assembly 1" of Fig. 3 together form the connection assembly 2 of Fig. 6. In particular, the fastener 8' of the contact assembly 1' is configured complementary to the fastener 8" of the contact assembly 1". In other words, the fastener 8" represents the counterpart 20 to the fastener 8' and vice versa. For this purpose, the fastener 8' has the internal thread 24 and the fastener 8" has the corresponding counter thread as external thread 30. The contact surfaces 50', 50" of the contact elements 4', 4" are in face-to-face contact and are pressed together by the fasteners 8', 8".

Furthermore, the connection assembly 2 has a respective contact protection housing 112', 112" for the contact assemblies 1', 1". As part of the respective contact protection housings 112', 112", the fasteners 8', 8" have contact protection caps 114', 114".

According to the invention, the contact assembly 1' shown in Fig. 6 can represent a battery terminal 116 of a battery cell (not shown), wherein the busbar 6' is electrically conductively connected to an electrode (not shown) of the battery cell. The contact assembly 1" shown in Fig. 6, together with the contact protection housing 112", may also represent a module connector 118 according to the invention. Together with the battery cell just mentioned, the module connector 118 can form a battery module (not shown) which can be connected to further battery modules (not shown) and/or electrical consumer units (not shown) via the busbars 6', 6".

### Reference signs

- 1, 1', 1": contact assembly
- 2: connection assembly
- 4, 4', 4": contact element
- 6, 6', 6": busbar
- 8, 8', 8": fastener
- 10: lead-through opening
- 12: contact section
- 14: collar section
- 16: reception opening
- 18: end section
- 20: counterpart
- 22: threaded sleeve
- 24: internal thread
- 26: threaded section
- 28: screw
- 30: external thread
- 32: support section
- 34: widening
- 36: screw head
- 38: inner diameter
- 40: outer diameter
- 42: first friction surface
- 44: outer surface
- 46: contact ring
- 48: end face
- 50, 50', 50": contact surface
- 52: counter contact
- 54: cross-section
- 56: height
- 58: length
- 60: gap
- 62: form fit
- 64: axial direction
- 66: shoulder
- 68: outer diameter
- 70: second friction surface
- 71: inner surface
- 72: radial direction
- 74: knurled section
- 76: rib
- 78: circumferential direction
- 80: serrations
- 82: knurled length
- 84: material thickness
- 86: area
- 88: area
- 90: inner diameter
- 92: area
- 94: inner diameter
- 96: step
- 98: step surface
- 100: stepped bore
- 101: outer surface
- 102: notch
- 104: material recess
- 106: axial fine bore
- 108: circumference
- 110: insertion bevel
- 112', 112": contact protection housing
- 114', 114": contact protection cap
- 116: battery terminal
- 118: module connector
- 120: inner surface

## Claims

1. Electrically conductive contact assembly (1, 1', 1") for a module connection, wherein the contact assembly (1, 1', 1") comprises a contact element (4, 4', 4"), a busbar (6, 6', 6"), and a fastener (8, 8', 8") for fastening the contact assembly (1) to a counterpart (20) of the module connection configured complementarily to the fastener (8, 8', 8"),
wherein the contact element (4, 4', 4") comprises a lead-through opening (10) for inserting the fastener (8, 8', 8"), a contact section (12) extending in a tube-shaped manner along the lead-through opening (10) with a contact surface (50, 50', 50") for a counter contact (52) of the module connection, and a collar section (14), which connects to the contact section (12) and extends the lead-through opening (10) in a sleeve-shaped manner,
wherein the busbar (6, 6', 6") comprises a reception opening (16) for receiving at least the collar section (14),
wherein the contact element (4, 4', 4") is configured affixable in the reception opening (16) with the busbar (6, 6', 6") in a frictionally engaging manner at a first friction surface (42),
wherein the contact element (4, 4', 4") is configured affixable in the reception opening (16) with the busbar (6, 6") or in the lead-though opening (10) with the fastener (8, 8') in a frictionally engaging manner at a second friction surface (70),
and wherein the first friction surface (42) and the second friction surface (70) are mutually offset at least in a radial direction (72) with respect to the lead-though opening (10).

2. Contact assembly (1, 1', 1") according to claim 1, wherein the contact element (4, 4', 4") comprises a shoulder (66) between the contact section (12) and the collar section (14), and wherein the contact element (4) abuts the busbar (6, 6', 6") with the shoulder (66).

3. Contact assembly (1, 1', 1") according to claim 1 or 2, wherein the fastener (8, 8', 8") comprises a threaded section (26) and is configured as a screw (28) with an external thread (30) on the threaded section (26) or as a threaded sleeve (22) with an internal thread (24) on the threaded section (26).

4. Contact assembly (1, 1', 1") according to one of claims 1 to 3, wherein the fastener (8, 8', 8") comprises a radially outwardly extending support section (32), wherein the fastener (8, 8', 8") rests with the support section (32) on the busbar (6).

5. Contact assembly (1, 1', 1") according to one of claims 1 to 4, wherein the collar section (14) is shorter than the reception opening (16) of the busbar (6, 6', 6").

6. Contact assembly (1, 1', 1") according to one of claims 1 to 5, wherein the fastener (8, 8') comprises a knurled section (74), wherein the collar section (14) of the contact member (4, 4') is deformed by the knurled section (74) after insertion of the fastener (8, 8') into the lead-through opening (10).

7. Contact assembly (1, 1', 1") according to claim 6, wherein the knurled section (74) is shorter than the reception opening (16) of the busbar (6, 6').

8. Contact assembly (1, 1', 1") according to one of claims 1 to 5, wherein the fastener (8, 8") is rotatably arranged in the lead-through opening (10) of the contact element (4, 4").

9. Contact assembly (1, 1', 1") according to one of claims 1 to 8, wherein the reception opening (16) of the busbar (6, 6', 6") is configured as a stepped bore (100).

10. Contact assembly (1, 1', 1") according to one of claims 1 to 9, wherein the reception opening (160) of the busbar (6, 6', 6") has at least one material recess (104) on its circumference (108).

11. Contact assembly (1, 1', 1") according to one of claims 1 to 10, wherein the first friction surface (42) is formed on an outer surface (44) of the contact element (4, 4', 4"), and wherein the second friction surface (70) is formed on an outer surface (101) of the contact element (4, 4") or on an inner surface (71) of the contact element (4, 4').

12. Module connector (118) comprising at least one contact assembly (1, 1") according to one of claims 1 to 11 and a contact protection housing (112"), wherein the contact protection housing (112") is configured to receive the at least one contact assembly (1, 1").

13. Connection assembly (2) with two contact assemblies (1, 1', 11") according to one of claims 1 to 11, wherein the respective fasteners (8, 8', 8") of the two contact assemblies (1, 1', 11") are configured to be complementary to one another.

14. Battery cell having at least one battery connection (116) and at least one electrode, wherein the at least one battery connection is configured as a contact assembly (1, 1') according to one of claims 1 to 11, and wherein the busbar (6, 6') of the contact assembly (1, 1') is electrically conductively connected to the at least one electrode of the battery cell.

15. Battery module with at least one battery cell according to claim 14 and at least one module connector (118) according to claim 12, wherein the fastener (8, 8') of the battery terminal (116) of the battery cell, which is configured as a contact assembly (1, 1'), is configured complementarily to the fastener (8, 8") of the contact assembly (1, 1") of the module connector (118).
